# EUROPEAN PATENT SPECIFICATION

(11) **EP 1 374 251 B1**
(45) Date of publication and mention of the grant of the patent: **10.05.2006**
(21) Application number: 02702597.2
(22) Date of filing: 28.02.2002
(51) Int. Cl.: G21D 1/02, G21D 3/08, F02C 9/24, F02C 1/05

(54) **A METHOD OF OPERATING A NUCLEAR POWER PLANT AND A NUCLEAR POWER PLANT**
VERFAHREN ZUM BETREIBEN EINER KERNREAKTORANLAGE UND KERNREAKTORANLAGE
CENTRALE NUCLEAIRE ET SON PROCEDE D'EXPLOITATION

(30) Priority: 26.03.2001 ZA 200102459
(43) Date of publication of application: 02.01.2004
(73) Proprietor: Pebble Bed Modular Reactor (Proprietary) Limited, 0046 Centurion (ZA)
(72) Inventor: KRIEL, Willem Adriaan Odendaal, 0157 Centurion (ZA); NIEUWOUDT, Michael Christiaan, 0157 Centurion (ZA)
(74) Representative: Calderbank, Thomas Roger
(86) International application number: PCT/IB2002/000601
(87) International publication number: WO 2002/078009

(56) References cited:
- GB-A- 1 319 665
- US-A- 3 220 191
- US-A- 3 629 060
- US-A- 3 797 516
- US-A- 4 000 617
- US-A- 4 148 191
- US-A- 4 645 641

## Description

THIS INVENTION relates to the generation of electricity. More particularly it relates to a method of operating a nuclear power plant and to a nuclear power plant. It also relates to a storage tank.

In a nuclear power plant making use of helium as a working fluid and having a nuclear reactor and power conversion system connected in a closed loop power generation circuit, the power generated is proportional to the mass flow rate of helium passing through the reactor core, such as process is known from US-A-4 645 641.

In order to permit the power generated to vary, use is made of a helium inventory control system configured to permit helium to be extracted from and introduced- into the power generation circuit thereby permitting the helium inventory in the power generation circuit and hence the mass flow through the reactor to be adjusted.

According to one aspect of the invention there is provided a method of operating a nuclear power plant having a closed loop power generation circuit making use of helium as the working fluid and a helium inventory control system as disclosed on claim 1.

The helium inventory control system typically includes a plurality of storage tanks, the pressure in which varies from a low pressure tank to a high pressure tank, the method then including restricting the temperature variation within each of the tanks.

Ideally, isothermal conditions are maintained within the or each storage tank since this permits optimization of the design of the storage tanks. This, however, is not practical and it is therefore desirable to maintain conditions within the tanks as close to isothermal as possible in a cost effective manner. The method may include restricting the temperature variation within the or each storage tank due to helium being introduced into or removed from the storage tank to 20°C.

Restricting the temperature variation may be achieved passively. To this end the method may include providing in the or each tank a heat sink.

According to another aspect of the invention there is provided a nuclear power plant as disclosed in claim 5.

The helium inventory control system may include a plurality of helium storage tanks and means for restricting the temperature variation in each of the tanks.

The plant may include a high pressure connection point and a low pressure connection point whereby the helium inventory control system is selectively connectable to the power generation circuit.

This arrangement permits helium to be extracted from the high pressure point and introduced into the power generation circuit at the low pressure point without the need for external compressors.

The power generation circuit may use a modified Brayton cycle as the thermodynamic conversion cycle. The power generation circuit may include two single-shaft turbine/compressor sets and one power turbine with a directly coupled electricity generator, a pre-cooler and inter-cooler positioned respectively between a hot or low pressure side of a counterflow recuperator and the low pressure compressor and between the low pressure compressor and the high pressure compressor.

Restricting the temperature variation in the helium storage tanks may be achieved passively. To this end, each tank may be designed to have a high thermal inertia. This is achieved by providing a heat sink in the or each tank.

Naturally, the heat sink may vary depending on requirements and fabrication limitations.

The heat sink may be of steel and have a mass of between 180 kg and 300 kg per cubic meter of storage capacity of the storage tank in which it is positioned.

The heat sink may have a surface area for heat transfer of between more than 400 and 500 m² per cubic meter of storage capacity of the storage tank.

The heat sink may include a plurality of plates, the spacing between which is between 25 and 40 times the plate thickness.

According to another aspect of the invention there is provided a storage tank suitable for use in a helium inventory control system of a nuclear power plant, as disclosed in claim 13.

The heat sink may have a heat capacitance of between 80 kJ/K and 140 kJ/K per cubic meter of storage capacity of the vessel.

The heat sink may be of steel and have a mass of between 180 kg and 300 kg per cubic meter of storage capacity of the vessel.

The heat sink may have a surface area of between more than 400 m² and 500 m² per cubic meter of storage capacity of the vessel.

The vessel may have a storage capacity of 100 m³ and the heat sink may be of steel and have a mass of 30000 kg and a surface area of between 40000 and 50000 m ²

The heat sink may be of aluminium and have a mass of between 90 kg and 150 kg per cubic meter of storage capacity of the vessel.

The heat sink may be formed from sheet material which has a plurality of dimples thereon, each dimple having a height which is between 20 to 40 times the thickness of the sheet material.

The heat sink may comprise a plurality of parallel sheets of material, the dimples serving to space adjacent sheets one from another and thereby facilitate the flow of helium between the sheets.

The heat sink may be in the form of sheet metal formed into a spiral.

The metal sheet may have a plurality of dimples thereon.

The height of each dimple may be between 20 and 40 times the thickness of the metal sheet.

The material may have a thickness of between 0.1 and 0.3 mm.

The heat sink may include a plurality of tubular elements.

The heat sink may be formed of wire mesh.

The invention will now be described, by way of example, with reference to the accompanying diagrammatic drawings.

In the drawings,
Figure 1 shows a schematic representation of part of a nuclear power plant in accordance with the invention;
Figure 2 shows a schematic representation of a helium inventory control system forming part of a nuclear power plant in accordance with the invention;
Figure 3 shows a schematic sectional elevation of part of a storage tank of a helium inventory control system in accordance with the invention;
Figure 4 shows, on an enlarged scale, a schematic transverse sectional elevation through another storage tank in accordance with the invention; and
Figure 5 shows a sectional elevation through part of yet another storage tank in accordance with the invention.

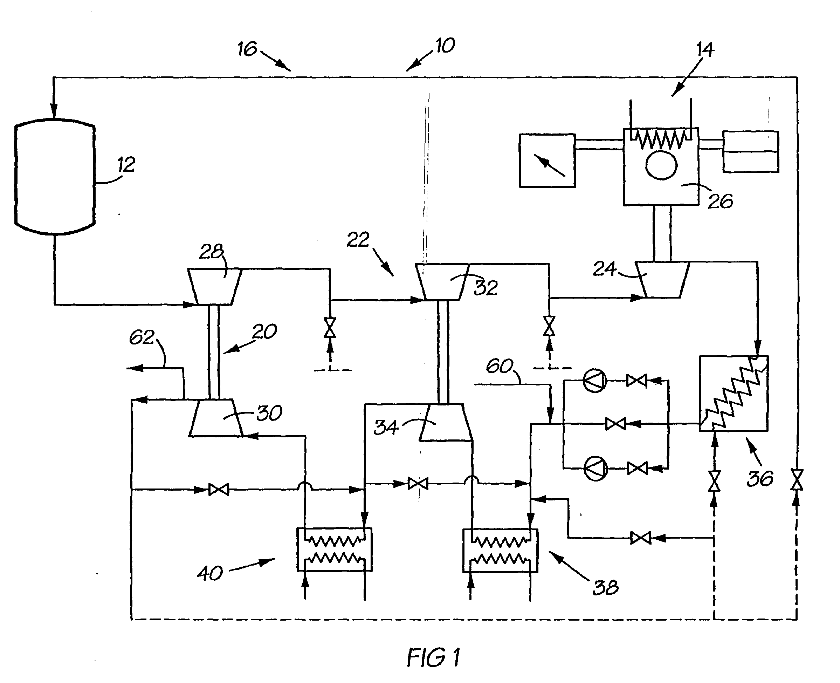

In Figure 1 of the drawings, reference numeral 10 refers generally to part of a nuclear power plant in accordance with the invention. The plant 10 includes a nuclear reactor 12 and a power conversion system, generally indicated by reference numeral 14 connected together in a closed loop power generation circuit, generally indicated by reference numeral 16.

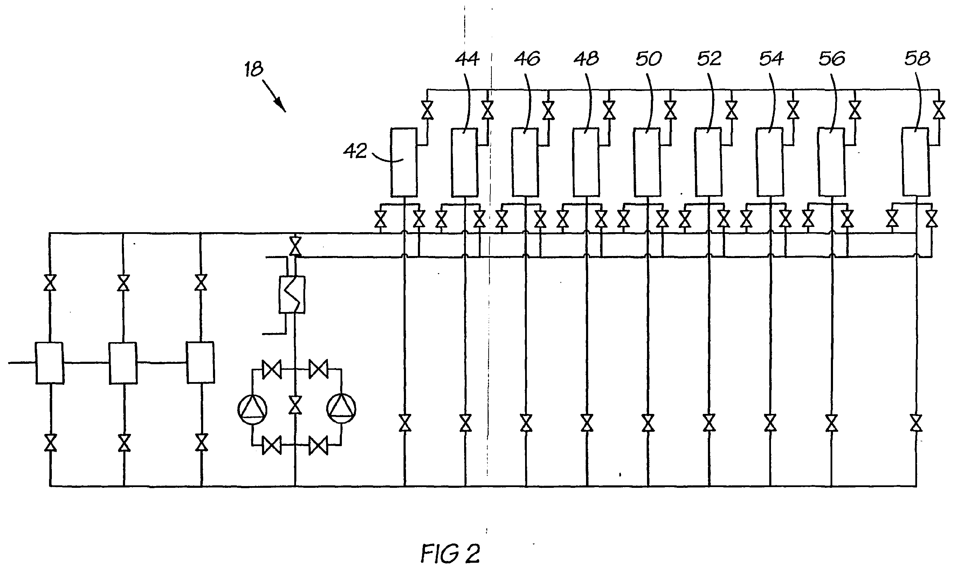

With reference now also to Figure 2 of the drawings, the nuclear power plant 10 includes a helium inventory control system, generally indicated by reference numeral 18 which is selectively connectable to and disconnectable from the power generation circuit 16 as described in more detail herebelow.

The power generation circuit 16 includes a high pressure single shaft turbine compressor set 20, a low pressure single shaft turbine compressor set 22 and a power turbine 24 drivingly connected to an electricity generator 26.

The high pressure turbine compressor set 20 includes a high pressure turbine 28 drivingly connected to a high pressure compressor 30. Similarly, the low pressure turbine compressor set 22 includes a low pressure turbine 32 drivingly connected to a low pressure compressor 34.

The power generation circuit 16 further includes a counter flow recuperator 36, a pre-cooler 38 and an inter-cooler 40. The pre-cooler 38 is positioned between a hot or low pressure side of the recuperator 36 and the low pressure compressor 34. The inter-cooler 40 is positioned between the low pressure compressor 34 and-the high pressure compressor 30.

The helium inventory control system 18 includes eight storage tanks 42 through to 56 and a booster tank 58.

The pressure in the tanks 42 to 56 varies with the lowest pressure being in the tank 42 and the highest pressure being in the tank 56 and a range of intermediate pressures in the tanks 44 to 54.

When it is desired to inject helium into the power generation circuit 16, helium is fed from the tank with the lowest pressure into the power generation circuit 16 at a low pressure injection point, indicated by reference numeral 60 in Figure 1. When helium is to be extracted from the power generation circuit 16, it is extracted from a high pressure extraction point, indicated by reference numeral 62 in Figure 1, and is fed into the tank with the highest pressure which has capacity to receive the helium.

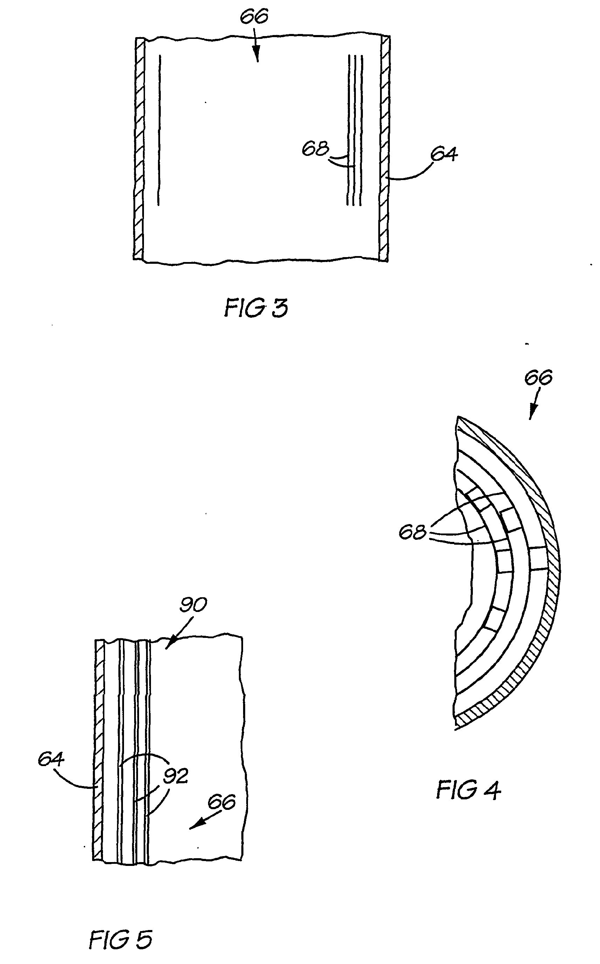

Referring now to Figure 3 of the drawings, each tank 42 to 58 includes a vessel 64 and a heat sink 66 positioned in the vessel 64.

The heat sink 66 is configured to have a sufficiently high thermal inertia so that irrespective of whether or not helium is being introduced into or removed from the tank, the temperature variation is relatively small, ie the maximum temperature variation does not exceed 20°C, so that generally isothermal conditions prevail within the tank.

In Figure 3 of the drawings, the heat sink 66 comprises a plurality of relatively thin parallel plates 68 arranged in a grid. Dimples on the plates serve to space them apart and permit the flow of helium therebetween.

The plates typically have a thickness of between 0.1 and 0.3 mm and the spacing between the plates is typically between 25 to 40 times the plate thickness. In this regard the inventors believe that plates having a thickness of less than about 0.1 mm will be difficult to work with. Further plates having a thickness of greater than 0.3 mm will have a reduced surface area per unit mass thereby decreasing the efficiency of the heat transfer between the heat sink and the helium. The spacing between the plates will typically be selected to provide an even distribution of the plates throughout the vessel 64.

Naturally, the thermal inertia of the heat sink 66 will vary depending upon the size of the tank. However, in a tank having a storage capacity of about 100 cubic metres, the heat sink 66, when manufactured from steel, will have a mass of about 30000 kg and a surface area of between 40000 to 50000 m². If the heat sink is manufactured from aluminium the heat sink will have a mass of about 15000 kg and a surface area of between 40000 m² and 50000 m ²

Naturally, the configuration of-the-heat-sink 66 can vary. Hence, for example, in Figure 4 of the drawings, unless otherwise indicated, the same reference numerals used above are used to designate similar parts. In this embodiment, the heat sink 66 is typically in the form of a spiral roll. Once again, when the tank has a storage capacity of about 100 m³, the heat sink may be formed from a sheet of metal 68 typically having a width of about 9.5 m and a thickness of between 0.1 to 0.3 mm with dimples of approximately 20 to 40 times the plate thickness provided thereon. The spiral is formed by forming the sheet metal into a roll which is generally circular in cross-section. In another embodiment, the roll may be generally square in cross-section. The dimples on the metal sheet serve to space adjacent layers of the sheet apart. One or more of these heat sinks 66 can be placed axially in a vessel 64 of a storage tank. Instead of using sheet material the heat sink 66 could be formed of wire mesh.

Similarly, in Figure 5 of the drawings, reference numeral 90 refers generally to part of another tank in accordance with the invention and, unless otherwise indicated, the same reference numerals used above are used to designate similar parts.

In this embodiment of the invention, the heat sink 66 is formed from a plurality of tubes 92. Typically the tubes 92 are arranged in an axial direction within the vessel 64.

The inventors believe that by restricting the temperature variation within the tanks, the storage volume required in order to store sufficient helium to satisfy the operating conditions of the nuclear power plant can be minimised.

## Claims

1. A method of operating a nuclear power plant having a closed loop power generation circuit making use of helium as the working fluid and a helium inventory control system having at least one helium storage tank connectable in flow communication with the closed loop power generation circuit to permit helium to be introduced into and removed from the power generation circuit, **characterised in that** the method includes the step of restricting the temperature variation within the at least one storage tank as a result of the introduction of helium into and the withdrawal of helium from the at least one storage tank, said step of restricting the temperature variation comprising:
providing a heat sink within the at least one storage tank, the heat sink having a surface area for heat transfer of at least 400 m² per cubic meter of storage capacity of the storage tank.

2. A method as claimed in claim 1, **characterised** that the heat sink has a surface area for heat transfer of between more than 400 m² and 500 m² per cubic meter of storage capacity of the storage tank.

3. A method as claimed in claim 1 or claim 2, in which the helium inventory control system includes a plurality of storage tanks, the pressure in which varies for a low pressure tank to a high pressure tank, the method being **characterised in that** it includes providing a heat sink within each of the tanks.

4. A method as claimed in any one of claims 1 to 3 wherein the temperature variation is restricted to 20 °C.

5. A nuclear power plant which includes
a closed loop power generation circuit (16) making use of helium as the working fluid; and
a helium inventory control system (18) which includes at least one helium storage tank (42) connectable in flow communication with the power generation circuit to permit helium to be introduced into and removed from the power generation circuit, **characterised by** means (66) for restricting the temperature variation within the at least one storage as a result of the introduction of helium into and the withdrawal of helium from the at least one storage tank, said means comprising:
a heat sink (66) within the at least one storage tank, the heat sink having a surface area for heat transfer of at least 400 m² per cubic meter of storage capacity of the storage tank.

6. A nuclear power plant as claimed in claim 5, **characterised in that** the heat sink has a surface area for heat transfer of between 400 m² and 500 m² per cubic meter of storage capacity of the storage tank.

7. A nuclear power plant as claimed in claim 5 or claim 6, **characterised in that** the helium inventory control system includes a plurality of helium storage tanks and a heat sink in each of the tanks.

8. A nuclear power plant as claimed in any one of claims 5 to 7 wherein said heat tank restricts the temperature variation to 20 ° C.

9. A nuclear power plant as claimed in any one of claim 5 to 8, inclusive, **characterised in that** it includes a high pressure connection point and a low pressure connection point whereby the helium inventory control system is selectively connectable to the power generation circuit.

10. A nuclear power plant as claimed in any one of claims 5 to 9, inclusive, **characterised in that** the heat sink is of steel and has a mass of between 180 kg and 300 kg per cubic meter of storage capacity of the storage tank in which it is positioned.

11. A nuclear power plant as claimed in any one of claims 5 to 10, inclusive, **characterised in that** the heat sink includes a plurality of plates, the spacing between which is at least 25 times the plate thickness.

12. A nuclear power plant as claimed in claim 11, **characterised in that** the spacing between-the plates is between 25 and 40 times the plate thickness.

13. A storage tank suitable for use in a helium inventory control system of a nuclear power plant as disclosed in claim 5, **characterised in that** the tank includes
a vessel; and
at least one heat sink positioned in the vessel, the heat sink having a surface area of at least 400 m² per cubic meter of storage capacity of the vessel.

14. A storage tank as claimed in claim 13, **characterised in that** the heat sink has a surface area of between more than 400m² and 500m² per cubic meter of storage capacity of the vessel.

15. A storage tank as claimed in claim 13 or claim 14, **characterised in that** the heat sink has a heat capacitance of between 80kJ/K and 140 kJ/K per cubic meter of storage capacity of the vessel.

16. A storage tank as claimed in any one of claims 13 to 15, inclusive, **characterised in that** the heat sink is of steel and has a mass of between 180 kg and 300 kg per cubic meter of storage capacity of the vessel.

17. A storage tank as claimed in any one of claims 13 to 16, inclusive, **characterised in that** the vessel has a storage capacity of 100 m³ and **in that** the heat sink is of steel and has a mass of 30000 kg and a surface area of between 40000 m² and 50000 m².

18. A storage tank as claimed in any one of claims 13 to 15, inclusive, **characterised in that** the heat sink is of aluminium and has a mass of between 90 kg and 150 kg per cubic meter of storage capacity of the vessel.

19. A storage tank as claimed in any one of claims 13 to 18, inclusive, **characterised in that** the heat sink is formed from sheet material which has a plurality of dimples thereon, each dimple having a height which is between 20 to 40 times the thickness of the sheet material.

20. A storage tank as claimed in claim 19, **characterised in that** the heat sink comprises a plurality of parallel sheets of material, the dimples serving to space adjacent sheets one from another.

21. A storage tank as claimed in any one of claims 13 to 18, inclusive; **characterised in that** the heat sink is in the form of sheet metal formed into a spiral.

22. A storage tank as claimed in claim 21, **characterised in that** the metal sheet has a plurality of dimples thereon.

23. A storage tank as claimed in claim 22, **characterised in that** the height of each dimple is between 20 and 40 times the thickness of the metal sheet.

24. A storage tank as claimed in any one of claims 16 to 23, inclusive, **characterised in that** the material has a thickness of between 0.1 and 0.3 mm.

25. A storage tank as claimed in any one of claims 13 to 15, inclusive, **characterised in that** the heat sink includes a plurality of tubular elements.

26. A storage tank as claimed in any one of claims 13 to 15, **characterised in that** the heat sink is formed of wire mesh.

## Patentansprüche

1. Verfahren zum Betreiben einer Kernreaktoranlage mit einem geschlossenen Energieerzeugungskreislauf, der sich Helium als Arbeitsmedium bedient, und einem Heliumbestandskontrollsystem mit mindestens einem Heliumspeichertank, der in Fließkommunikation mit dem geschlossenen Energieerzeugungskreislauf verbindbar ist, um zu ermöglichen, Helium in den Energieerzeugungskreislauf einzuleiten und daraus zu entfernen, **dadurch gekennzeichnet, dass** das Verfahren den Schritt des Begrenzens der Temperaturschwankung innerhalb des mindestens einen Speichertanks infolge des Einleitens von Helium in den und des Entfernens von Helium aus dem mindestens einen Speichertank umfasst, wobei der Schritt des Begrenzens der Temperaturschwankung umfasst:
Bereitstellen einer Wärmesenke innerhalb des mindestens einen Speichertanks, wobei die Wärmesenke einen Oberflächenbereich zur Wärmeübertragung von mindestens 400m² je Kubikmeter Speicherkapazität des Speichertanks aufweist.

2. Verfahren nach Anspruch 1, **dadurch gekennzeichnet, dass** die Wärmesenke einen Oberflächenbereich für die Wärmeübertragung zwischen mehr als 400m² und 500m² je Kubikmeter Speicherkapazität des Speichertanks aufweist.

3. Verfahren nach Anspruch 1 oder Anspruch 2, wobei das Heliumbestandskontrollsystem mehrere Speichertanks aufweist, wobei der Druck in diesen von einem Niedrigdrucktank zu einem Hochdrucktank unterschiedlich ist, wobei das Verfahren **dadurch gekennzeichnet ist, dass** es die Bereitstellung einer Wärmesenke innerhalb jedes der Tanks umfasst.

4. Verfahren nach einem beliebigen der Ansprüche 1. bis 3, wobei die Temperaturschwankung auf 20°C begrenzt ist.

5. Kernreaktoranlage, welche umfasst:
einen geschlossenen Energieerzeugungskreislauf (16), der sich Helium als Arbeitsmedium bedient; und
ein Heliumbestandskontrollsystem (18), welches mindestens einen Heliumspeichertank (42) aufweist, der in Fließkommunikation mit dem Energieerzeugungskreislauf verbindbar ist, um zu ermöglichen, Helium in den Energieerzeugungskreislauf einzuleiten und daraus zu entfernen, **gekennzeichnet durch** Mittel (66) zum Begrenzen der Temperaturschwankung innerhalb des mindestens einen Speichertanks infolge des Einleitens von Helium in den und des Entfernens von Helium aus dem mindestens einen Speichertank, wobei die Mittel umfassen:
eine Wärmesenke (66) innerhalb des mindestens einen Speichertanks, wobei die Wärmesenke einen Oberflächenbereich für die Wärmeübertragung von mindestens 400m² je Kubikmeter Speicherkapazität des Speichertanks aufweist.

6. Kernreaktoranlage nach Anspruch 5, **dadurch gekennzeichnet, dass** die Wärmesenke einen Oberflächenbereich für den Wärmeübergang zwischen 400m² und 500m² je Kubikmeter Speicherkapazität des Speichertanks aufweist.

7. Kernreaktoranlage nach Anspruch 5 oder Anspruch 6, **dadurch gekennzeichnet, dass** das Heliumbestandskontrollsystem mehrere Heliumspeichertanks und eine Wärmesenke in jedem der Tanks aufweist.

8. Kernreaktoranlage nach einem beliebigen der Ansprüche 5 bis 7, wobei der Wärmetank die Temperaturschwankung auf 20°C begrenzt.

9. Kernreaktoranlage nach einem beliebigen der Ansprüche 5 bis inklusive 8, **dadurch gekennzeichnet, dass** sie einen Hochdruckanschlusspunkt und einen Niederdruckanschlusspunkt aufweist, wodurch das Heliumbestandskontrollsystem selektiv mit dem Energieerzeugungskreislauf verbindbar ist.

10. Kernreaktoranlage nach einem beliebigen der Ansprüche 5 bis inklusive 9, **dadurch gekennzeichnet, dass** die Wärmesenke aus Stahl hergestellt ist und eine Masse zwischen 180kg und 300kg je Kubikmeter Speicherkapazität des Speichertanks, in welchem sie angeordnet ist, aufweist.

11. Kernreaktoranlage nach einem beliebigen der Ansprüche 5 bis inklusive 10, **dadurch gekennzeichnet, dass** die Wärmesenke mehrere Platten umfasst, wobei der Abstand zwischen diesen mindestens das 25fache der Plattendicke ausmacht.

12. Kernreaktoranlage nach Anspruch 11, **dadurch gekennzeichnet, dass** der Abstand zwischen den Platten zwischen dem 25- und 40fachen der Plattendicke ausmacht.

13. Speichertank, der zur Verwendung in einem Heliumbestandskontrollsystem einer Kernreaktoranlage nach Anspruch 5 geeignet ist, **dadurch gekennzeichnet, dass** der Tank umfasst:
einen Behälter; und
mindestens eine in dem Behälter angeordnete Wärmesenke, wobei die Wärmesenke einen Oberflächenbereich von mindestens 400m² je Kubikmeter Speicherkapazität des Behälters aufweist.

14. Speichertank nach Anspruch 13, **dadurch gekennzeichnet, dass** die Wärmesenke einen Oberflächenbereich zwischen mehr als 400m² und 500m² je Kubikmeter Speicherkapazität des Behälters aufweist.

15. Speichertank nach Anspruch 13 oder Anspruch 14, **dadurch gekennzeichnet, dass** die Wärmesenke ein Wärmespeichervermögen zwischen 80kJ/K und 140kJ/K je Kubikmeter Speicherkapazität des Behälters aufweist.

16. Speichertank nach einem beliebigen der Ansprüche 13 bis inklusive 15, **dadurch gekennzeichnet, dass** die Wärmesenke aus Stahl hergestellt ist und eine Masse zwischen 180kg und 300kg je Kubikmeter Speicherkapazität des Behälters aufweist.

17. Speichertank nach einem beliebigen der Ansprüche 13 bis inklusive 16, **dadurch gekennzeichnet, dass** der Behälter eine Speicherkapazität von 100m³ aufweist und die Wärmesenke aus Stahl hergestellt ist und eine Masse von 30000kg und einen Oberflächenbereich zwischen 40000m² und 50000m² aufweist.

18. Speichertank nach einem beliebigen der Ansprüche 13 bis inklusive 15, **dadurch gekennzeichnet, dass** die Wärmesenke aus Aluminium hergestellt ist und eine Masse zwischen 90kg und 150kg je Kubikmeter Speicherkapazität des Behälters aufweist.

19. Speichertank nach einem beliebigen der Ansprüche 13 bis inklusive 18, **dadurch gekennzeichnet, dass** die Wärmesenke aus Folienmaterial gebildet ist, welches mehrere Vertiefungen darauf aufweist, wobei jede Vertiefung eine Höhe aufweist, die zwischen dem 20- und dem 40fachen der Dicke des Folienmaterials ausmacht.

20. Speichertank nach Anspruch 19, **dadurch gekennzeichnet, dass** die Wärmesenke mehrere parallele Folien aus Material aufweist, wobei die Vertiefungen dazu dienen, benachbarte Folien voneinander zu beabstanden.

21. Speichertank nach einem beliebigen der Ansprüche 13 bis inklusive 18, **dadurch gekennzeichnet, dass** die Wärmesenke in Form von Blech, welches zu einer Spirale geformt ist, vorliegt.

22. Speichertank nach Anspruch 21, **dadurch gekennzeichnet, dass** das Blech mehrere Vertiefungen darauf aufweist.

23. Speichertank nach Anspruch 22, **dadurch gekennzeichnet, dass** die Höhe jeder Vertiefung zwischen dem 20- und dem 40fachen der Dicke des Bleches ausmacht.

24. Speichertank nach einem beliebigen der Ansprüche 16 bis inklusive 23, **dadurch gekennzeichnet, dass** das Material eine Dicke zwischen 0,1 und 0,3mm aufweist.

25. Speichertank nach einem beliebigen der Ansprüche 13 bis inklusive 15, **dadurch gekennzeichnet, dass** die Wärmesenke mehrere rohrförmige Elemente aufweist.

26. Speichertank nach einem beliebigen der Ansprüche 13 bis 15, **dadurch gekennzeichnet, dass** die Wärmesenke aus Drahtnetzgewebe gebildet ist.

## Revendications

1. Procédé de fonctionnement d'une centrale nucléaire possédant un circuit de production d'énergie en circuit fermé utilisant de l'hélium comme fluide de travail et un système de contrôle des stocks d'hélium ayant au moins un réservoir de stockage d'hélium pouvant être raccordé en communication de flux au circuit de production d'énergie en circuit fermé pour permettre à l'hélium d'être introduit à l'intérieur et évacué du circuit de production d'énergie, **caractérisé en ce que** le procédé comprend l'étape consistant à limiter la variation de température à l'intérieur du au moins un réservoir de stockage en conséquence de l'introduction d'hélium dans et de l'évacuation d'hélium du au moins un réservoir de stockage, ladite étape consistant à limiter la variation de température comprenant :
la fourniture d'un puits de chaleur au sein du au moins un réservoir de stockage, le puits de chaleur ayant une aire pour le transfert de chaleur d'au moins 400 m² par mètre cube de capacité de stockage du réservoir de stockage.

2. Procédé selon la revendication 1, **caractérisé en ce que** le puits de chaleur possède une aire pour le transfert de chaleur de plus de 400 m ² à 500 m² par mètre cube de capacité de stockage du réservoir de stockage.

3. Procédé selon la revendication 1 ou la revendication 2, dans lequel le système de contrôle des stocks d'hélium inclut une pluralité de réservoirs de stockage, à l'intérieur desquels la pression varie selon qu'il s'agit d'un réservoir basse pression ou d'un réservoir haute pression, le procédé étant **caractérisé en ce qu'**il inclut la fourniture d'un puits de chaleur à l'intérieur de chacun des réservoirs.

4. Procédé selon l'une quelconque des revendications 1 à 3 dans lequel la variation de température est limitée à 20°C.

5. Centrale nucléaire qui inclut
un circuit de production d'énergie en circuit fermé (16) utilisant de l'hélium en tant que fluide de travail ; et
un système (18) de contrôle des stocks d'hélium incluant au moins un réservoir (42) de stockage d'hélium pouvant être raccordé en communication de flux avec le circuit de production d'énergie en circuit fermé pour permettre à l'hélium d'être introduit à l'intérieur de et évacué du circuit de production d'énergie, **caractérisé par** un moyen (66) destiné à limiter la variation de température à l'intérieur du au moins un réservoir de stockage en conséquence de l'introduction d'hélium dans et à l'évacuation d'hélium du au moins un réservoir de stockage, ledit moyen comprenant :
un puits de chaleur (66) au sein du au moins un réservoir de stockage, le puits de chaleur ayant une aire pour le transfert de chaleur d'au moins 400 m² par mètre cube de capacité de stockage du réservoir de stockage.

6. Centrale nucléaire selon la revendication 5, **caractérisée en ce que** le puits de chaleur a une aire pour le transfert de chaleur de 400 m ² à 500 m² par mètre cube de capacité de stockage du réservoir de stockage.

7. Centrale nucléaire selon la revendication 5 ou la revendication 6, **caractérisée en ce que** le système de contrôle des stocks d'hélium inclut une pluralité de réservoirs de stockage d'hélium et un puits de chaleur dans chacun des réservoirs.

8. Centrale nucléaire selon l'une quelconque des revendications 5 à 7 dans laquelle ledit réservoir de chaleur limite la variation de température à 20°C.

9. Centrale nucléaire selon l'une quelconque des revendications 5 à 8, incluses, **caractérisée en ce qu'**elle inclut un point de raccordement haute pression et un point de raccordement basse pression par lesquels le système de contrôle des stocks d'hélium peut être sélectivement raccordé au circuit de production d'énergie.

10. Centrale nucléaire selon l'une quelconque des revendications 5 à 9, incluses, **caractérisée en ce que** le puits de chaleur est constitué d'acier et a une masse de 180 kg à 300 kg par mètre cube de capacité de stockage du réservoir de stockage dans lequel il est positionné.

11. Centrale nucléaire selon l'une quelconque des revendications 5 à 10, incluses, **caractérisée en ce que** le puits de chaleur in clut une pluralité de plaques, l'espace entre ces dernières est au moins 25 fois l'épaisseur de la plaque.

12. Centrale nucléaire selon la revendication 11, **caractérisée en ce que** l'espace entre les plaques est de 25 à 40 fois l'épaisseur de la plaque.

13. Réservoir de stockage adapté à l'utilisation dans un système de contrôle des stocks d'hélium d'une centrale nucléaire, tel que décrit dans la revendication 5, **caractérisé en ce que** le réservoir inclut
une cuve ; et
au moins un puits de chaleur positionné dans la cuve, le puits de chaleur ayant une aire d'au moins 400 m² par mètre cube de capacité de stockage de la cuve.

14. Réservoir de stockage selon la revendication 13, **caractérisé en ce que** le puits de chaleur a une aire de plus de 400 m² à 500 m² par mètre cube de capacité de stockage de la cuve.

15. Réservoir de stockage selon la revendication 13 ou la revendication 14, **caractérisé en ce que** le puits de chaleur a une capacité calorifique de 80kJ/K à 140 kJ/K par mètre cube de capacité de stockage de la cuve.

16. Réservoir de stockage selon l'une quelconque des revendications 13 à 15, incluses, **caractérisé en ce que** le puits de chaleur est constitué d'acier et a une masse de 180 kg à 300 kg par mètre cube de capacité de stockage du réservoir de stockage de la cuve.

17. Réservoir de stockage selon l'une quelconque des revendications 13 à 16, incluses, **caractérisé en ce que** la cuve à une capacité de stockage de 100m³ et **en ce que** le puits de chaleur est constitué d'acier et a une masse de 30 000 kg et une aire de 40 000 m² à 50 000 m².

18. Réservoir de stockage selon l'une quelconque des revendications 13 à 15, incluses, **caractérisé en ce que** le puits de chaleur est constitué d'aluminium et a une masse de 90 kg à 150 kg par mètre cube de capacité de stockage de la cuve.

19. Réservoir de stockage selon l'une quelconque des revendications 13 à 18, incluses, **caractérisé en ce que** le puits de chaleur est constitué d'une plaque de matériau qui possède une pluralité de renflements, chaque renflement ayant une hauteur 20 à 40 fois l'épaisseur de la plaque de matériau.

20. Réservoir de stockage selon la revendication 19, **caractérisé en ce que** le puits de chaleur comprend une pluralité de plaques de matériau parallèles, les renflements servant à espacer les plaques adjacentes les unes aux autres.

21. Réservoir de stockage selon l'une quelconque des revendications 13 à 18, incluses, **caractérisé en ce que** le puits de chaleur est sous forme de tôle formée en spirale.

22. Réservoir de stockage selon la revendication 21, **caractérisé en ce que** la tôle a une pluralité de renflements sur elle.

23. Réservoir de stockage selon la revendication 22, **caractérisé en ce que** la hauteur de chaque renflement est de 20 à 40 fois l'épaisseur de la tôle.

24. Réservoir de stockage selon l'une quelconque des revendications 16 à 23, incluses, **caractérisé en ce que** le matériau a une épaisseur de 0,1 à 0,3 mm.

25. Réservoir de stockage selon l'une quelconque des revendications 13 à 15, incluses, **caractérisé en ce que** le puits de chaleur inclut une pluralité d'éléments tubulaires.

26. Réservoir de stockage selon l'une quelconque des revendications 13 à 15, **caractérisé en ce que** le puits de chaleur est formé d'un treillis métallique.
